# EUROPEAN PATENT APPLICATION

(11) **EP 3 422 547 A1**
(43) Date of publication of application: **02.01.2019**
(21) Application number: 17178681.7
(22) Date of filing: 29.06.2017
(51) Int. Cl.: H02M 1/12, H03H 7/01, H01F 27/34, H02J 3/01

(54) **POWER CONVERTER SYSTEM**

(71) Applicant: Siemens Aktiengesellschaft, 80333 München (DE)
(72) Inventor: Kjesbu, Harald, 7517 Hell (NO); Skjellnes, Asle Einar, 7054 Ranheim (NO)
(74) Representative: Maier, Daniel Oliver

(57) **Abstract**

A power converter system for connection between an AC circuit (110) and a DC circuit (130). The power converter system comprises a power converter (100); and a transformer (300) coupled to the AC side of the power converter (100) and comprising primary and secondary windings (301, 302) for voltage adaptation. The transformer (300) comprises an auxiliary winding (303) connected to a filter element (304), to in use filter the supply between the AC side of the power converter (100) and an AC circuit (110) coupled to the transformer (300).

## Description

### Technical Field

The present disclosure relates to a power converter systems, and methods of operating power converter systems. In particular the disclosure is concerned with power converter systems which include a filter that is integrated with a transformer.

### Background

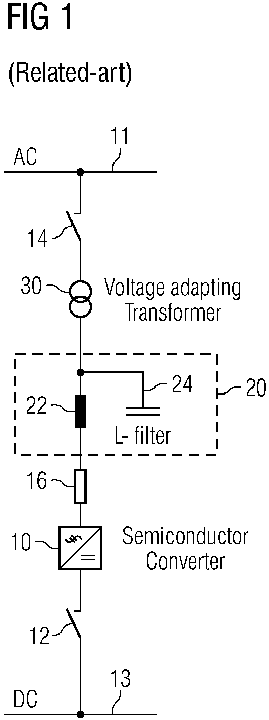

Semiconductor power converters that convert a DC input to an AC output by pulse width modulation typically are provided with a filter in order to smooth the output waveform and to control the effect of low harmonic feedback in the output AC circuit. Figure 1 shows an example power converter system in which a semiconductor power converter 10 is positioned between an AC circuit 11 and a DC circuit 13. The semiconductor power converter 10 is switchable into and out of use by breakers 12, 14 and protected on the AC side by a fuse 16. Voltage adaptation on the AC side is further accomplished by a transformer 30, with a filter 20 provided between the semiconductor power converter 10 and the transformer 30. The filter 20 comprises filter elements in the form of an inductor 22 and a capacitor 24, arranged in an L-filter configuration.

In theory, a power converter system with the basic architecture of Figure 1 may readily be configured to achieve a desired set of operational characteristics, by suitable component choice. However, in practice a number of problems arise. Firstly, the filter elements are generally high cost and take up significant space when installed between the AC circuit and DC circuit as part of the same switchboard as the other elements of the power converter system. Alternatively, space for the filter elements may be provided remotely from the other components of the power conversion system, but this increases the risk of unwanted high frequency oscillations or other instability when in practice other non-linear loads are coupled to the power converter system.

Space considerations are particularly acute when the power converter system is to operate within the confines of in a vessel, for example for two way operation between an medium voltage AC circuit to which electrical generators and AC consumers are coupled, and a low voltage DC circuit to which backup energy storage elements are coupled.

Hence a power converter system which is of compact construction, low cost and improved electrical performance is desirable.

### Summary

According to the present disclosure there is provided a power converter system, and a method of operating a power converter system as set forth in the appended claims. Other features of the invention will be apparent from the description which follows.

Accordingly there may be provided a power converter system for connection between an AC circuit and a DC circuit, comprising a power converter; a transformer coupled to the AC side of the power converter and comprising primary and secondary windings for voltage adaptation, and characterised in that: the transformer comprises an auxiliary winding connected to a filter element, to in use filter the supply between the AC side of the power converter and an AC circuit coupled to the transformer.

The filter element may comprise a capacitive filter element. The filter element may be integral to the transformer.

Using an auxiliary winding of the transformer and an associated filter element on the AC side of the power converter enables increased integration of components, thus leading to a more compact physical arrangement, for example without the need for a separate filter cabinet or for additional connections for the filter element on a switchboard associated with the power converter system.

The auxiliary winding may comprise a centre winding. In this way the winding may be readily optimised to operate at voltage consistent with the design parameters of a filter including the filter element coupled thereto.

The power converter may comprise one or more further filter elements, integral to the transformer. The power converter may comprise further filter elements, configured with the filter element connected to the auxiliary winding in a T-filter configuration.

The power converter may comprise inductive filter elements, for example provided by the primary and secondary windings of the transformer.

The filter element connected to the auxiliary winding may comprise the parallel-connected leg of a T-filter configuration. The primary and secondary windings of the transformer may comprise the series-connected legs of a T-filter configuration.

The power converter system may further comprise a connection for auxiliary AC consumers, the connection being fed by the auxiliary winding, and arranged to provide power to auxiliary AC consumers connected to the power converter system. Providing multiple AC supplies from the power converter is advantageous in a vessel where AC consumers with relatively lower power requirements, such as pumps, lighting etc. are operated alongside relatively higher power requirements such as thrusters.

The transformer may suitably comprise a galvanic isolation transformer to provide isolation between an AC circuit and a DC circuit between which the power convert system is connected in use.

The AC circuit may comprise a medium voltage circuit, operating for example between 10kV and 20kV, such as operating at 12kV AC. The DC circuit may comprise a low voltage circuit, operating for example between 500V and 1000V, such as operating at 930V DC.

The power converter system may comprise a power converter with an active front end at the AC side. The active front end may comprise control logic responsive to harmonic components on the AC circuit, and operable to provide a virtual resistor in the filter configuration to provide a damping effect on said harmonic components.

Accordingly there may be provided a transformer for a power converter system, comprising primary and secondary windings for voltage adaptation, and an auxiliary winding connected to an integral capacitive filter element.

Accordingly there may be provided a method of operating a power converter system, connected between an AC circuit and a DC circuit, and comprising a power converter with a transformer coupled to the AC side thereof, the transformer comprising primary and secondary windings for voltage adaptation, the method characterized by the step of filtering the supply between the power converter and an AC circuit coupled to the transformer using a filter element coupled to an auxiliary winding of the transformer.

Example embodiments have been described with reference to different types of subject matter. In particular, some example embodiments have been described with reference to method type steps whereas other embodiments have been described with reference to structural or functional apparatus features. However, a person skilled in the art will gather from the above and the following description that, unless otherwise notified, in addition to any combination of features belonging to one type of subject matter, any combination of features relating to different subject matter, in particular between method features and apparatus features should be considered to be disclosed by this document too.

### Brief Description of the Drawings

Examples of the present disclosure will now be described with reference to the accompanying drawings, in which:
Figure 1 shows circuit diagram of a related-art power converter system;
Figure 2 shows a circuit diagram of a power converter system according to an example embodiment; and
Figure 3 shows a circuit diagram of a T-filter configuration, according to an example embodiment;
Figure 4 is flow diagram that schematically illustrates a method of operating a power converter system according to an example embodiment.

### Detailed Description

The illustrations in the drawings are in schematic form. It is noted that in different Figures, similar or identical elements are provided with the same reference signs.

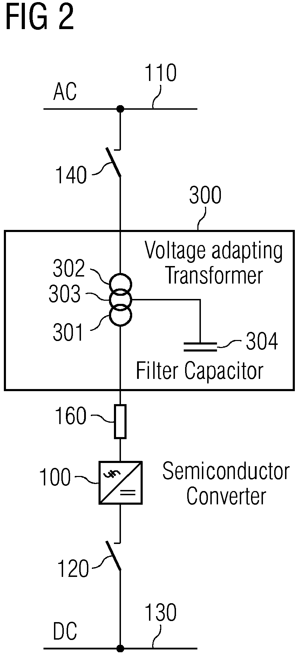

Figure 2 shows a circuit diagram of a power converter system according to an example embodiment. The power converter is arranged between an AC circuit 110 and a DC circuit 130. The power converter is configured to operates in two directions, so that in AC-DC mode it receives electrical energy from the AC circuit and supplies it to the DC circuit 130, and so that in DC-AC mode it receives electrical energy from the DC circuit 130 and supplies it to the AC circuit 110. This general arrangement may in particular be useful as a power converter system used as part of an electrical distribution system of a vessel. The AC circuit 110 in this example embodiment comprises a medium voltage circuit to which electrical generators and AC consumers such as vessel thrusters are coupled, operating at 12kV AC. The DC circuit 130 comprises a low voltage circuit to which backup energy storage elements such as batteries are coupled, operating at 930V DC.

The power converter system of Figure 2 comprises a power converter 100, including semiconductor switches and associated control logic that is used to determine the operation mode for the power converter system. A transformer 300 is used to provide further voltage adaptation between the AC circuit 110 and the power converter 100.

The transformer 300 is coupled to the AC side of the power converter 100 and comprises primary and secondary windings 301, 302 for voltage adaptation. As will be appreciated, the electrical definition which of the windings comprises the primary and which comprises the secondary will change according to the operation mode of the power converter 100. The transformer 300 further comprises an auxiliary winding 303 connected to a filter element 304, the filter element being provided in the form of a capacitor. In the example embodiment shown the auxiliary winding 303 comprises a centre winding.

When the power converter system is in use, the filter element 304 servers filter the supply between the AC side of the power converter 100 and an AC circuit 110 which is coupled to the transformer 300. According the mode of operation of the power converter 100, this supply may be from the AC circuit 110 to the power converter 100, or from the power converter 100 to the AC circuit 110.

The filter element 304 is physically integrated with the transformer, and as such does not require separate space or connections to the AC circuit 110. This physical integration may for example include being provided within the same housing, or integral by being attached intimately to the body which includes the windings 301-303 of the transformer 300, or to the transformer core.

As well as the benefits of space saving, use of an integral filter element in this way reduces the risk of unwanted high frequency oscillations or other instability non-linear loads are coupled to the power converter system, such as electric motors, or where there may be relatively long interconnections in the circuits.

Also shown in Figure 2 are protection elements, namely breakers 120, 140 that are used to switch the converter into and out of connection with the AC circuit 110 and the DC circuit 130, and on the AC side a fuse 160.

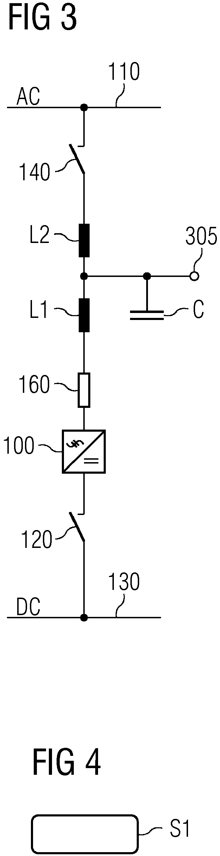

Figure 3 shows a shows a schematic circuit diagram of a T-filter configuration including the filter element 304 as capacitor C, and inductors L1, L2. The inductors L1, L2 are representative of the leakage inductance of the primary and secondary windings 301, 302 of the transformer 300.

The capacitor C is coupled to the auxiliary winding 303 to provide the parallel-connected leg of the T-filter configuration and the inductors L1, L2 provide the series-connected legs of a T-filter configuration. In this schematic circuit diagram the equivalent circuit elements for the voltage adaptation function of the transformer 300 are not shown - the Figure serves to illustrate the T-filter configuration and the relative positions of the filter elements only.

Also shown in Figure 3 is a connection 305 for auxiliary AC consumers, the connection being fed by the auxiliary winding 303, and arranged to provide power to auxiliary AC consumers connected to the power converter system. In a vessel, providing multiple AC supplies from the power converter 100 is advantageous, and it is possible to design the auxiliary winding 303 to produce suitable operating voltage for the capacitor C in terms of its filter operation, and for output to AC consumers with relatively lower power requirements, such as pumps, lighting etc.

To increase flexibility in operation, the power converter 100 comprises an active front end at the AC side. The control logic of the power converter 100 is arranged to operate the active front end to be responsive to harmonic components on the AC circuit 110, and in response to provide a virtual resistor to be added to the filter configuration between the power converter 100 and the AC circuit 110 to provide a damping effect on said harmonic components.

Figure 4 schematically illustrates a method of operating a power converter system, according to an example embodiment. The method is for example performed in a vessel using a power converter system connected between an AC circuit and a DC circuit, and comprising a power converter with a transformer coupled to the AC side thereof. The transformer comprises primary and secondary windings for voltage adaptation. The method comprises the step of filtering the supply between the power converter and an AC circuit coupled to the transformer using a filter element coupled to an auxiliary winding of the transformer (S1).

In further steps, not shown, an active front end of the power converter operates to change the filter characteristics by providing a virtual resistor into the filter arrangement comprising the filter element, to thereby provide a damping effect on harmonic components in the AC circuit.

By use of a power converter system as described herein, compact construction, low cost and improved electrical performance may be achieved.

Although a few preferred embodiments have been shown and described, it will be appreciated by those skilled in the art that various changes and modifications might be made without departing from the scope of the invention, as defined in the claims.

It should be noted that the term "comprising" does not exclude other elements or steps and "a" or "an" does not exclude a plurality. Also elements described in association with different embodiments may be combined. All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features. It should also be noted that reference signs in the claims should not be construed as limiting the scope of the claims.

Attention is directed to all papers and documents which are filed concurrently with or previous to this specification in connection with this application and which are open to public inspection with this specification, and the contents of all such papers and documents are incorporated herein by reference.

## Claims

1. A power converter system for connection between an AC circuit (110) and a DC circuit (130), comprising a power converter (100); a transformer (300) coupled to the AC side of the power converter (100) and comprising primary and secondary windings (301, 302) for voltage adaptation, and **characterised in that**: the transformer (300) comprises an auxiliary winding (303) connected to a filter element (304), to in use filter the supply between the AC side of the power converter (100) and an AC circuit (110) coupled to the transformer (300).

2. The power converter system of claim 1, wherein the filter element (304) comprises a capacitive filter element.

3. The power converter system of claim 1 or 2, wherein the filter element (304) is integral to the transformer (300).

4. The power converter system of any preceding claim, wherein the auxiliary winding (303) comprises a centre winding of the transformer.

5. The a power converter system of any preceding claim, comprising one or more further filter elements (L1, L2), integral to the transformer (300).

6. The power converter system of any preceding claim, comprising further filter elements (L1, L2), configured with the filter element (C) connected to the auxiliary winding (303) in a T-filter configuration.

7. The power converter system of any preceding claim, comprising a further filter element (L1, L2), provided by leakage inductance in the primary or secondary windings (301, 302) of the transformer (300).

8. The power converter system of any preceding claim, wherein the filter element connected (C) to the auxiliary winding (303) comprises the parallel-connected leg of a T-filter configuration.

9. The power converter system of claim 8, wherein leakage inductances of the primary and secondary windings (301, 302) of the transformer (300) comprise series-connected legs of a T-filter configuration.

10. The power converter system of any preceding claim, wherein the power converter (100) comprises an active front end at the AC side, with control logic responsive to harmonic components on the AC circuit (110), and operable to provide a virtual resistor to in use cooperate with a filter element (304) connected to the auxiliary winding (303) to thereby to provide a damping effect on said harmonic components.

11. The power converter system of any preceding claim, further comprising a connection (305) for auxiliary AC consumers, the connection (305) being fed by the auxiliary winding (303), and arranged to in use provide power to auxiliary AC consumers connected to the power converter system.

12. The power converter system of any preceding claim, wherein transformer (300) comprises a galvanic isolation transformer to provide isolation between an AC circuit (110) and a DC circuit (130) between which the power convert system is connected in use.

13. The power converter system of any preceding claim, wherein the AC circuit (110) comprises a medium voltage circuit, operating between 10kV and 20kV, and/or the DC circuit (130) comprises a low voltage circuit, operating between 500V and 1000V.

14. The power converter system of any preceding claim, integrated with the electrical distribution system of a vessel.

15. A method of operating a power converter system, connected between an AC circuit and a DC circuit, and comprising a power converter with a transformer coupled to the AC side thereof, the transformer comprising primary and secondary windings for voltage adaptation, the method **characterized by** the step of filtering the supply between the power converter and an AC circuit coupled to the transformer using a filter element coupled to an auxiliary winding of the transformer (S1).
